# EUROPÄISCHE PATENTSCHRIFT

(11) **EP 1 400 739 B1**
(45) Veröffentlichungstag und Bekanntmachung des Hinweises auf die Patenterteilung: **11.10.2006**
(21) Anmeldenummer: 03018098.8
(22) Anmeldetag: 08.08.2003
(51) Int. Cl.: F16L 23/032, F16L 37/20

(54) **Lösbare Verbindung von Profilbauteilen**
Disconnectable joint between profile members
Jonction amovible entre éléments profilés

(30) Priorität: 19.09.2002 DE 10243644
(43) Veröffentlichungstag der Anmeldung: 24.03.2004
(73) Patentinhaber: ROTH-TECHNIK AUSTRIA Gesellschaft m.b.H., 3193 St.Aegyd a.N. (AT)
(72) Erfinder: Mai, Hans-Peter, 76456 Kuppenheim/Oberndorf (DE); Lampel, Werner, 3193 St. Aegyd am Neuwalde (AT)
(74) Vertreter: Wiedemann, Markus

(56) Entgegenhaltungen:
- CH-A- 488 977
- DE-B- 1 046 964
- DE-C- 932 785
- US-A- 3 556 568
- US-A- 5 199 747
- US-A- 5 421 624

## Beschreibung

### Stand der Technik

Die Erfindung geht aus von einer lösbaren Verbindung von Profilbauteilen, insbesondere von Gehäuseschalen, wobei Profilenden oder Randbereiche der Profilbauteile derart geformt sind, dass sie in Linienberührung direkt aneinander oder unter Zwischenordnung eines Dichtelements anschlagen, gemäß dem Oberbegriff des Anspruchs 1.

Solche Verbindungen kommen in der Technik häufig vor, beispielsweise zum lösbaren Verbinden von Gehäuse- oder Behälterschalen, von Rohrabschnitten untereinander, von Rohren mit Gehäusen oder Behältern, von Deckeln mit Gehäusen etc. Aus der DE 101 20 974 C1 ist beispielsweise eine lösbare Verbindung bekannt, bei welcher ein Bodenteil und ein Deckel eines Schalldämpfers einer Brennkraftmaschine mit jeweils einem umlaufenden Bund versehen sind, welche flächig aneinander anliegen und durch aufgesteckte, klammernde C-Profile miteinander verbunden sind.

Die bekannten lösbaren Verbindungen haben jedoch den Nachteil, daß es bei Metallkombinationen mit hohem Potentialunterschied zu Kontaktkorrosion kommt und sich die Verbindung aufgrund ihrer flächigen Geometrie dadurch nur sehr schwer wieder lösen läßt. Zum andern werden die zumeist flächig aneinander liegenden Enden nach mehrmaligem Lösen der Verbindung häufig verformt, so daß danach eine Zentrierung der Bauelemente nicht mehr oder nur unter Inkaufnahme von Verzwängungen möglich ist. Weiterhin wirkt sich Kontaktkorrosion oder Verformungen im Fügebereich negativ auf die Dichtigkeit der Verbindung aus, welche insbesondere bei Abgasanlagen von Kraftfahrzeugen eine wesentliche Rolle spielt. In der Praxis können jedoch Potentialunterschiede der zu verbindenden Bauelemente bzw. mechanische Belastungen der Profilenden oft nicht vermieden werden.

Die CH-A-488 977 beschreibt eine lösbare Verbindung zwischen Profilbauteilen eines Boilers, welche gemäß dem Oberbegriff von Patentanspruch 1 ausgebildet ist, wobei die Profilbauteile randseitig sich linienhaft kontaktierende Bördelungen aufweisen.

### Aufgabe der Erfindung

Der Erfindung liegt die Aufgabe zugrunde, eine lösbare Verbindung der eingangs erwähnten Art derart weiter zu entwickeln, dass sie eine hohe Dichtigkeit und Steifigkeit gewährleistet.

Diese Aufgabe wird erfindungsgemäß durch die kennzeichnenden Merkmale des Patentanspruchs 1 gelöst.

### Vorteile der Erfindung

Die erfindungsgemäße Verbindung gemäß Anspruch 1 hat den Vorteil, daß wegen der Linienberührung eine äußerst kleine Kontaktfläche zwischen den zu verbindenden Elementen vorhanden ist, so daß wegen der reduzierten Kontaktfläche weniger Tendenz besteht, daß die Elemente aufgrund von Kontaktkorrosion zusammenhaften und sich nur schwer oder überhaupt nicht mehr voneinander lösen lassen. Durch die Linienberührung im Kontaktbereich bildet sich außerdem eine Dichtkante aus, welche aufgrund der relativ hohen Pressung entlang der Kontaktlinie besser dichtet wie dies etwa bei einer flächigen Berührung der Fall ist. Die Ausbildung einer Dichtkante ist insbesondere bei zwischengeordneten elastischen Dichtungen von Vorteil, weil wegen der höheren Pressung im Dichtspalt kleinere Spannkräfte ausreichen, welche durch ein zusätzliches Spannelement aufgebracht werden. Als Dichtelemente können günstige, handelsübliche Formdichtungen wie Flach- oder Runddichtungen verwendet werden.

Wenn die Profilbauteile je doppelwandig ausgebildet sind und zwei mit Abstand im wesentlichen parallel zueinander verlaufende Wände aufweisen, wobei je eine Wand eines Profilbauteils am Profilende eine zu anderen Wand weisende Einrollung oder Bördelung aufweist, welche die andere Wand kontaktiert, erfüllen die Bördelungen oder Einrollungen eine Mehrfachfunktion, indem sie einerseits die bereits erwähnt, vorteilhafte Linienberührung sicherstellen, als Dichtflächen wirken, den Zwischenraum zwischen den beiden Wänden verschließen und zusätzlich die Formsteifigkeit der Profilenden erhöhen, da sie als Stützkörper die eine Wand gegen die andere Wand abstützen. Diese Art der Doppelwandverbindung ist außerdem äußerst kostengünstig zu realisieren.

Durch die in den Unteransprüchen aufgeführten Maßnahmen sind vorteilhafte Weiterbildungen und Verbesserungen der im Patentanspruch 1 angegebenen Erfindung möglich.

Eine besonders zu bevorzugende Ausführungsform der Erfindung sieht vor, daß die Profilenden im Kontaktbereich eine wesentlichen kreisbogenförmige Umfangsfläche aufweisen und sie je eine wenigstens einen Teilkreis beschreibende Bördelung oder Einrollung aufweisen. Die Bördelungen oder Einrollungen berühren sich dann entlang einer Linie und sind auf einfache und günstige Weise durch Rollieren herstellbar. Darüber hinaus sind sie wegen ihrer hohen Gestaltsteifigkeit oder Formstabilität relativ unempfindlich gegenüber mechanischen Einwirkungen. Weiterhin ist bei zwei sich kontaktierenden kreisbogenförmigen Umfangsflächen die Lage der Berührungslinie für die Dichtfunktion nicht von Bedeutung, so daß die erfindungsgemäße Verbindung fehlertolerant ist. Dies ist gerade bei Bauteilen von Abgasanlagen von Kraftfahrzeugen von besonderem Vorteil, welche fertigungsbedingt relativ große Toleranzen aufweisen.

Gemäß einer Fortbildung ist die die Einrollung oder Bördelung aufweisende Wand eine innere Wand einer Gehäuseschale und die äußere Wand der Gehäuseschale mit je einer zusätzlichen, nach außen weg ragenden Bördelung oder Einrollung versehen, wobei zwischen den Einrollungen oder Bördelungen der beiden Profilenden eine Formdichtung angeordnet ist. Dann wird die Formdichtung zwischen den insgesamt vier Bördelungen oder Einrollungen mittig zentriert, deren vier Umfangsflächen sämtlich als Dichtflächen wirken. Folglich ist eine sehr gute Abdichtung des durch die verbundenen Profilbauteile umgebenen Hohlraumes gegenüber der Umgebung gegeben. Weil solche doppelwandigen Profilbauteile mit zwischen den Wänden angeordnetem Dämmmaterial (Integraldämmung) als Gehäuseschalen von Schalldämpfern, Rußfiltern und Katalysatoren von Fahrzeugen mit Brennkraftmaschinen verwendet werden und dort die Dichtigkeit der Verbindung eine wesentliche Rolle spielt, ist diese Eigenschaft besonders vorteilhaft. Die mit Bördelungen oder Einrollungen versehenen Profilbauteile sind außerdem in vorteilhafter Weise nach Art eines Baukastens jeweils untereinander beliebig kombinierbar, weil die Kontaktflächen jeweils identisch ausgebildet sind und in jedem Fall eine Linienberührung gegeben ist.

Um die beiden Profilenden fest miteinander zu verbinden, sind vorzugsweise die von der Gehäuseschale nach außen weg ragenden Bördelungen oder Einrollungen der Profilenden durch Übergriff eines Spannmittels, beispielsweise eines handelsüblichen Spannbandes mit kegelstumpfförmigem Querschnitt gegeneinander gespannt. Durch Verkürzen des entlang einer Fügeebene der Profilbauteile verlaufenden Spannbandes werden die im wesentlichen kreisrunden Einrollungen oder Bördelungen in den kegelförmigen Querschnitt des Spannbandes gedrückt, wodurch die beiden Profilbauteile gegeneinander gespannt und miteinander formschlüssig verbunden werden.

Es können weiterhin eine oder mehrere an einem Profilbauteil festgelegte Spannklauen vorgesehen sein, welche in eine Einrollung oder Bördelung des anderen Profilbauteils eingreifbar ausgebildet sind.

Zur Zentrierung der miteinander zu verbindenden Profilbauteile kann beispielsweise vorgesehen sein, daß zumindest ein Profilbauteil wenigstens einen Zentrierkragen aufweist, welcher über das eine Profilbauteil hinausragt, das andere Profilbauteil überlappend unter- oder übergreift und es in eingangs beschriebener vorteilhafter Weise lediglich in Linienberührung kontaktiert. Dies kann beispielsweise dadurch realisiert sein, daß der Zentrierkragen im wesentlichen parallel zu dem anderen Profilbauteil verläuft und dieses beispielsweise mittels einer seitlich vorspringenden Rundsicke linienhaft berührt.

### Zeichnungen

Ausführungsbeispiele der Erfindung sind in den Zeichnungen dargestellt und in der nachfolgenden Beschreibung näher erläutert. In den Zeichnungen zeigt
- Fig. 1: eine Querschnittsdarstellung durch ein nicht erfindungsgemäßes Ausführungsbeispiel einer lösbare Verbindung von zwei einwandigen Profilbauteilen;
- Fig.2: eine perspektivische Ansicht der lösbaren Verbindung von Fig. 1;
- Fig.3: eine Querschnittsdarstellung eines erfindungsgemäßen Ausführungsbeispiels einer lösbaren Verbindung von zwei doppelwandigen Profilbauteilen;
- Fig.4: eine Querschnittsdarstellung eines weiteren erfindungsgemäßen Ausführungsbeispiels einer lösbaren Verbindung von zwei doppelwandigen Profilbauteilen;
- Fig. 5: eine Querschnittsdarstellung eines weiteren Ausführungsbeispiels einer lösbaren Verbindung von zwei doppelwandigen Profilbauteilen;
- Fig.6: eine Querschnittsdarstellung eines weiteren, nicht erfindungsgemäßen Ausführungsbeispiels einer lösbaren Verbindung von zwei einwandigen Profilbauteilen;

### Beschreibung der Ausführungsbeispiele

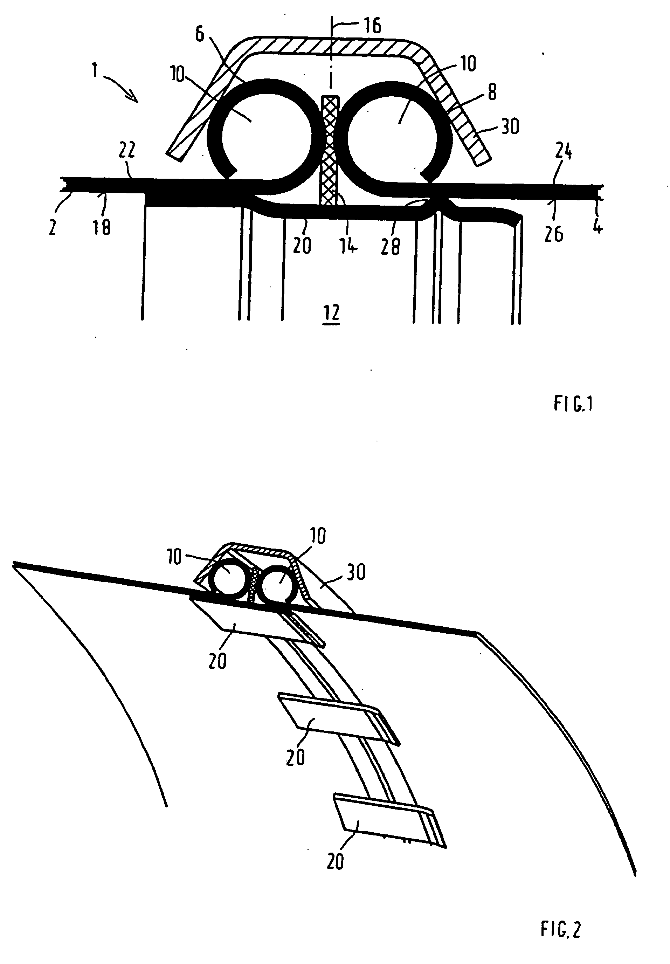

Im nicht erfindungsgemäßen Ausführungsbeispiel nach Fig.1 dient die lösbare Verbindung 1 zur Verbindung zweier Profilbauteile, beispielsweise von zwei zylindrischen Gehäuseschalen 2, 4 eines Abgas-Schalldämpfers. Die beiden Gehäuseschalen 2, 4 weisen endseitige Ränder auf, im folgenden allgemein Profilenden 6, 8 genannt, welche stimseitig stoßend aneinander befestigt werden sollen.

Die Profilenden 6, 8 sind derart geformt, daß sie in Linienberührung direkt aneinander oder unter Zwischenordnung eines Dichtelements anschlagen. Vorzugsweise weisen die Profilenden 6, 8 im Kontaktbereich je eine im wesentlichen kreisbogenförmige Umfangsfläche auf. Hierzu ist den Profilenden 6, 8 beispielsweise je eine im wesentlichen einen Vollkreis beschreibende Bördelung oder Einrollung 10 angeformt, welche nach außen weg ragt. Die Bördelung oder Einrollung 10 kann durch Rollieren gefertigt sein, indem das ursprünglich gerade Profilende 6, 8 kreisförmig nach hinten gebogen wird. Folglich ist die Bördelung oder Einrollung 10 einstückig mit dem Profilende 6, 8 bzw. mit der Gehäuseschale 2, 4, alternativ könnte sie auch an das Profilende 6, 8 angesetzt sein. Der Durchmesser der Bördelung oder Einrollung 10 kann fallweise angepaßt werden.

Zur Abdichtung des Innenraumes 12 des durch die beiden Gehäuseschalen 2, 4 gebildeten Gehäuses gegenüber der Umgebung ist den beiden Bördelungen oder Einrollungen 10 eine Dichtung, vorzugsweise eine Flachdichtung 14 zwischengeordnet, welche im wesentlichen in einer Fügeebene 16 der beiden Gehäusschalen 2, 4 und tangential zu den kreisförmigen Umfangsflächen der Bördelungen oder Einrollungen 10 angeordnet ist und daher beidseitig linienhaft kontaktiert wird.

Zur Zentrierung der beiden Gehäuseschalen 2, 4 sind an der Innenfläche 18 der einen Gehäuseschale 2 mehrere mit Umfangsabstand zueinander angeordnete Zentrierkrägen 20 beispielsweise durch Schweißung festgelegt, wie insbesondere anhand von Fig.2 zu sehen ist. Die flächigen Zentrierkrägen 20 verlaufen im wesentlichen parallel zu den Wänden 22, 24 der Gehäuseschalen 2, 4 und ragen über das Profilende 6 der einen Gehäuseschale 2 hinaus, wobei sie die andere Gehäuseschale 4 überlappend untergreifen und deren Innenfläche 26 in Linienberührung kontaktieren, wie Fig.1 zeigt. Hierzu sind die Zentrierkrägen 20 leicht gekröpft, wobei sie die Innenfläche 26 der Wand 24 der anderen Gehäuseschale 4 mittels einer seitlich vorspringenden Rundsicke 28 linienhaft kontaktieren. Die Zentrierkrägen 20 sind ähnlich wie Kragbalken ausgebildet und aufgrund ihrer relativ geringen Gestaltsteifigkeit sowie Ihres Materials, vorzugsweise Edelstahl, biegeelastisch. Deshalb können sie toleranzbedingte Maßabweichungen ausgleichen. Weiterhin erlauben die Zentrierkrägen 20 eine Verdrehung der beiden Gehäuseschalen 2, 4 gegeneinander. Schließlich dienen die Zentrierkrägen 20 auch zur Lagesicherung der Flachdichtung 14. Anstatt mehrerer, mit Umfangsabstand zueinander angeordneter Zentrierkrägen 20 kann auch ein umlaufender Zentrierkragen vorhanden sein.

Die Verbindung der beiden Profilenden 6, 8 erfolgt durch ein Spannmittel, vorzugsweise durch ein zylindrisches Spannband 30 mit kegelstumpfförmigem Querschnitt, dessen Mittelebene im wesentlichen in der Fügeebene 16 der beiden Gehäuseschalen 2, 4 liegt und dessen Querschnitt sich in einer von den Gehäuseschalen 2, 4 weg weisenden Richtung verengt. Durch Verkürzen des Spannbandes 30 werden die im wesentlichen kreisrunden Einrollungen oder Bördelungen 10 in den sich verengenden Querschnitt des Spannbandes 30 gedrückt, wodurch die beiden Gehäuseschalen 2, 4 und insbesondere die beiden Einrollungen oder Bördelungen 10 stirnseitig gegeneinander gespannt und miteinander formschlüssig verbunden werden. Gleichzeitig wird der Druck auf die Flachdichtung 14 erhöht, was die Dichtwirkung verbessert. Weil das Spannband 30 bedingt durch seinen kegelförmigen Querschnitt die beiden äußeren Einrollungen oder Bördelungen 10 zentriert, können die Zentrierkrägen 20 auch wahlweise entfallen. Gleichermaßen ist auch eine Verbindung 1 ohne zwischengeordnete Dichtung 14 denkbar.

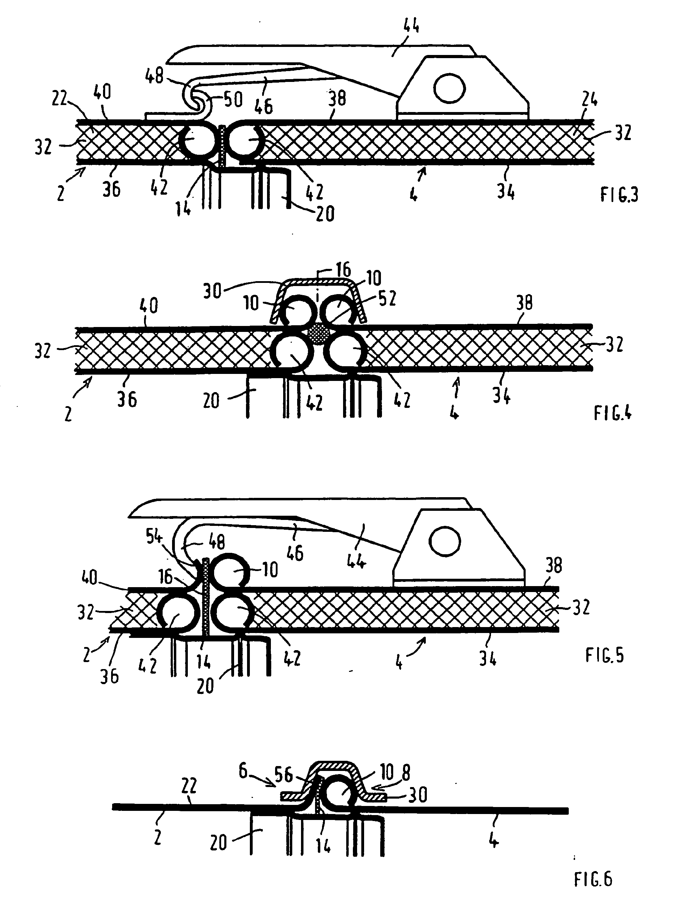

Bei den weiteren Ausführungsbeispielen nach den Fig.3 bis 6 sind die gegenüber dem vorhergehenden Beispiel gleichbleibenden und gleichwirkenden Teile durch die gleichen Bezugszeichen gekennzeichnet. Bei der in Fig.3 gezeigten Ausführungsform der Erfindung sind die Wände 22, 24 der Gehäuseschalen 2, 4 je doppelwandig ausgebildet, wobei in einem Zwischenraum Dämmmaterial 32 aufgenommen ist. Solche doppelwandigen Gehäuseschalen 2, 4 werden beispielsweise bei Katalysatoren, Abgasschalldämpfern und Rußfiltern verwendet. Hierbei ist eine innere Wand 34, 36 mit Abstand und im wesentlichen parallel zu einer äußeren Wand 38, 40 angeordnet. Bei der gezeigten Ausführungsform ist die äußere Wand 38, 40 jeweils endseitig nach innen gerollt und bildet eine nach innen ragende Bördelung oder Einrollung 42. Dabei ist der Durchmesser der Bördelung oder Einrollung 42 derart gewählt, daß sie jeweils die gegenüberliegende, innere Wand 34, 36 kontaktiert und folglich einen Abschluß des Zwischenraumes sowie eine Wandstütze bildet. Der Kontaktbereich hat wiederum die Form einer Linie. Die Verbindung der Gehäuseschalen 2, 4 erfolgt durch eine oder mehrere beispielsweise an der anderen Gehäuseschale 4 festgelegte, mittels eines Hebels 44 handbetätigbare Spannklauen 46, von welchen je ein rundhakenförmiges Endstück 48 in eine nicht ganz zum Vollkreis geschlossene und vorzugsweise an der äußeren Wand 40 der einen Gehäuseschale 2 festgelegten und in Bezug zum Endstück 48 der Spannklaue 46 gegenläufigen äußeren Einrollung oder Bördelung 50 eingreifbar ausgebildet ist. Durch Öffnen des Hebels 44 gerät das rundhakenförmige Endstück 48 der Spannklaue 46 mit der Bördelung 50 außer Eingriff, wodurch die Verbindung 1 gelöst ist.

Die Ausführungsform gemäß Fig.4 unterscheidet sich von derjenigen von Fig.3 dadurch, daß die innere Einrollung oder Bördelung 42 aufweisende Wand jeweils die innere Wand 34, 36 ist und die äußere Wand 38, 40 mit je einer zusätzlichen, nach außen ragenden Bördelung oder Einrollung 10 versehen ist. Dabei fluchtet jeweils die äußere Bördelung oder Einrollung 10 mit der inneren Bördelung oder Einrollung 42 etwa in der Fügeebene 16. Hierdurch entsteht eine Lücke, in welcher eine Formdichtung, vorzugsweise eine Runddichtung 52 angeordnet ist. Genauer ist die Runddichtung 52 zentral zwischen den insgesamt vier Einrollungen oder Bördelungen 10, 42 angeordnet und kontaktiert jede von ihnen entlang einer Linie. Wie bei der Ausführungsform von Fig. 1 sind die beiden nach außen ragenden Bördelungen oder Einrollungen 10 von einem Spannband 30 mit kegelstumpfförmigem Querschnitt übergriffen, um eine Verbindung zwischen den Gehäuseschalen 2, 4 zu schaffen.

Im Unterschied zur Ausführungsform von Fig.4 ist bei der Ausführungsform gemäß Fig. 5 eine der äußeren Bördelungen oder Einrollungen 54 nicht zum Vollkreis ausgeführt, um das Einhaken einer Spannklaue 46 zu ermöglichen, wie sie schon bei der Ausführungsform von Fig.3 gezeigt ist. Weiterhin wird keine Runddichtung, sondern eine Flachdichtung 14 verwendet, welche im wesentlichen in der Fügeebene 16 der beiden Gehäuseschalen 2, 4 und tangential zu den kreisförmigen Umfangsflächen der Bördelungen oder Einrollungen 10, 42, 54 angeordnet ist. Vorzugsweise kontaktiert die Flachdichtung 14 lediglich die beiden äußeren Bördelungen oder Einrollungen 10, 54 linienhaft, während sie von den beiden inneren Bördelungen oder Einrollungen 42 einen geringen Abstand hält. Die Flachdichtung 14 wird wiederum durch Zentrierkrägen 20 lagegesichert.

Gemäß der weiteren, in Fig.6 gezeigten, nicht erfindungsgemäßen Ausführungsform weist beispielsweise die andere Gehäuseschale 4 eine im wesentlichen kreisbogenförmige Umfangsfläche in Form einer äußeren Bördelung oder Einrollung 10 und die eine Gehäuseschale 2 eine hierzu tangential verlaufende Fläche 56 in Form einer Aufkelchung auf. Hierzu wird das eine Profilende 6 beispielsweise winkelig gekantet, wodurch eine ebene, einen stumpfen Winkel mit der Wand 22 der einen Gehäuseschale 2 einnehmende Fläche 56 entsteht. Die äußere Bördelung oder Einrollung 10 und die hierzu tangential verlaufende Fläche 56 des anderen Profilendes 8 sind ebenfalls durch ein Spannband 30 mit kegelstumpfförmigem Querschnitt übergriffen, um die beiden Gehäuseschalen 2, 4 aneinander zu befestigen.

Die Erfindung ist nicht auf eine lösbare Verbindung von Gehäuseschalen 2, 4 beschränkt, sondern kann bei jeglicher Art von Profilbauteil, beispielsweise bei der Verbindung von Rohren untereinander, der Anbindung von Rohren an Behältern oder Gehäusen, der Anbindung von Deckeln an Gehäusen etc. Anwendung finden.

## Patentansprüche

1. Lösbare Verbindung von Profilbauteilen, insbesondere von Gehäuseschalen, wobei Profilenden (6, 8) oder Randbereiche der Profilbauteile (2, 4) derart geformt sind, daß sie in Linienberührung direkt aneinander oder unter Zwischenordnung eines Dichtelements (14; 52) anschlagen **dadurch gekennzeichnet, dass** die Profilbauteile (2, 4) zumindest am Profilende (6, 8) je doppelwandig ausgebildet sind und zwei mit Abstand im wesentlichen parallel zueinander verlaufende Wände (34, 36, 38, 40) aufweisen, wobei je eine Wand (38, 40) eines Profilbauteils (2, 4) am Profilende (6, 8) eine zur anderen Wand (38, 40) hin ragende Einrollung oder Bördelung (42) aufweist, welche die andere Wand (34, 36) kontaktiert.

2. Lösbare Verbindung nach Anspruch 1, **dadurch gekennzeichnet, daß** die Profilenden (6, 8) eine im wesentlichen kreisbogenförmige Umfangsfläche aufweisen.

3. Lösbare Verbindung nach Anspruch 2, **dadurch gekennzeichnet, daß** die Profilenden (6, 8) je mindestens eine wenigstens einen Teilkreis beschreibende Bördelung oder Einrollung (10, 42, 54) aufweisen.

4. Lösbare Verbindung nach wenigstens einem der vorhergehenden Ansprüche, **dadurch gekennzeichnet, daß** die die Einrollung oder Bördelung (42) aufweisende Wand eine innere Wand (34, 36) einer Gehäuseschale (2, 4) ist und die äußere Wand (38, 40) der Gehäuseschale (2, 4) mit je einer zusätzlichen, in Bezug auf die Gehäuseschale (2, 4) nach außen ragenden Bördelung oder Einrollung (10) versehen ist.

5. Lösbare Verbindung nach Anspruch 4, **dadurch gekennzeichnet, daß** zwischen den Einrollungen oder Bördelungen (10, 42) der beiden Profilenden (6, 8) eine Formdichtung (52) angeordnet ist.

6. Lösbare Verbindung nach Anspruch 4 oder 5, **dadurch gekennzeichnet, daß** die nach außen ragenden Bördelungen oder Einrollungen (10) der Profilenden (6, 8) durch Übergriff eines Spannmittels (30) mit kegelstumpfförmigem Querschnitt gegeneinander gespannt sind.

7. Lösbare Verbindung nach einem der Ansprüche 3 bis 6, **dadurch gekennzeichnet, daß** wenigstens eine an einem Profilbauteil (4) festgelegte Spannklaue (46) vorgesehen ist, welche in eine Einrollung oder Bördelung (54) des anderen Profilbauteils (2) eingreifbar ausgebildet ist.

8. Lösbare Verbindung nach einem der vorhergehenden Ansprüche, **dadurch gekennzeichnet, daß** zumindest ein Profilbauteil (2) wenigstens einen Zentrierkragen (20) aufweist, welcher über das eine Profilbauteil (2) hinausragt, das andere Profilbauteil (4) überlappend unter- oder übergreift und es in Linienberührung kontaktiert.

9. Lösbare Verbindung nach Anspruch 8, **dadurch gekennzeichnet, daß** der Zentrierkragen (20) flächig ausgebildet ist und im wesentlichen parallel zu dem anderen Profilbauteil (4) verläuft.

10. Lösbare Verbindung nach einem der vorhergehenden Ansprüche, **dadurch gekennzeichnet, daß** sie für Gehäuseschalen (2, 4) von Schalldämpfern, Rußfiltern, Katalysatoren und Kraftstofftanks von Fahrzeugen, insbesondere Nutzfahrzeugen vorgesehen ist.

## Claims

1. A releasable connection of profiled components, in particular of housing shells, wherein profile ends (6, 8) or edge areas of the profiled components (2, 4) are formed in such a way that they abut against each other in a line contact either directly or with the interposition of a sealing element (14; 52), **characterised in that** the profiled components (2, 4) each have a double-wall configuration, at least at the profile ends (6, 8), and have two spaced walls (34, 36, 38, 40) extending essentially parallel to each other, wherein each wall (38, 40) of a profiled component (2, 4) has a rolled-up portion or bead (42) extending toward the other wall (38, 40) to contact the other wall (34, 36).

2. The releasable connection according to claim 1, **characterised in that** the profile ends (6, 8) have an essentially circular circumferential surface.

3. The releasable connection according to claim 2, **characterised in that** the profile ends (6, 8) each have at least one bead or rolled-up portion (10, 42, 54) extending at least in a segment of a circle.

4. The releasable connection according to any one of the preceding claims, **characterised in that** the wall comprising the rolled-up portion or bead (42) is an inner wall (34, 36) of a housing shell (2, 4) and each outer wall (38, 40) of the housing shell (2, 4) is provided with an additional bead or rolled-up portion (10) extending toward the outside with respect to the housing shell (2, 4).

5. The releasable connection according to claim 4, **characterised in that** between the rolled-up portions or beads (10, 42) of the two profile ends (6, 8) a gasket (52) is disposed.

6. The releasable connection according to claim 4 or 5, **characterised in that** the beads or rolled-up portions (10), extending toward the outside, of the profile ends (6, 8), are clamped against each other by an overlaying clamping means (30) with a frusto-conical cross-section.

7. The releasable connection according to any one of claims 3 to 6, **characterised in that** at least one clamping claw (46), fixed on one (4) of the profiled components, is provided which is adapted to engage a rolled-up portion or bead (54) of the other one (2) of the profiled components.

8. The releasable connection according to any one of the preceding claims, **characterised in that** at least one profiled component (2) has at least one centering collar (20) extending beyond the one profiled component (2), overlapping the other profiled component (4) in an overlaying or underlaying manner, and contacting it in a line contact.

9. The releasable connection according to claim 8, **characterised in that** the centering collar (20) has a planar configuration and extends essentially in parallel to the other profiled component (4).

10. The releasable connection according to any one of the preceding claims, **characterised in that** it is provided for housing shells (2, 4) of silencers, particulate filters, catalytic converters and fuel tanks of vehicles, in particular industrial vehicles.

## Revendications

1. Raccord détachable de composants profilés, en particulier de coques de bâti, les extrémités de profilé (6, 8) ou les zones marginales des composants profilés (2, 4) étant formées de telle manière qu'elles frappent directement l'une contre l'autre en contact linéaire ou en intercalant un élément d'étanchéité (14 ; 52), **caractérisé en ce que** les composants profilés (2, 4) sont configurés respectivement chacun à double paroi au moins à l'éxtrémité du profilé (6, 8) et présentent deux parois (34, 36, 38, 40) subtantiellement parallèles l'une à l'autre avec un écart, une paroi (38, 40) d'un composant profilé (2, 4) présentant respectivement chacune à l'extrémité de profilé (6, 8) un enroulement ou un bord rabattu (42) allant vers l'autre paroi (38, 40), enroulement qui a contact avec l'autre paroi (34, 36).

2. Raccord détachable selon la revendication 1, **caractérisé en ce que** les extrémités de profilé (6, 8) présentent une surface circonférentielle substantiellement en forme d'arc de cercle.

3. Raccord détachable selon la revendication 2, **caractérisé en ce que** les extrémités de profilé (6, 8) présentent respectivement chacune un bord rabattu ou enroulement (10, 42, 64) qui décrit au moins un cercle partiel.

4. Raccord détachable selon au moins l'une des revendications précédentes, **caractérisé en ce que** la paroi qui présente l'enroulement ou le bord rabattu (42) est une paroi intérieure (34, 36) d'une coque de bâti (2, 4) et la paroi extérieure (38, 40) de la coque de bâti (2, 4) est pourvue d'un bord rabattu ou d'un enroulement supplémentaire (10) qui va vers l'extérieur par rapport à la coque de bâti (2, 4).

5. Raccord détachable selon la revendication 4, **caractérisé en ce qu'**une étanchéité moulée (52) est placée entre les enroulements ou les bords rabattus (10, 42) des deux extrémités de profilé (6, 8).

6. Raccord détachable selon la revendication 4 ou 5, **caractérisé en ce que** les bords rabattus ou enroulements (10) des extrémités de profilé (6, 8) qui vont vers l'extérieur sont tendus l'un contre l'autre par recouvrement d'un moyen de serrage (30) avec une section en forme de cône tronqué.

7. Raccord détachable selon l'une des revendications 3 à 6, **caractérisé en ce qu'**au moins une griffe de serrage (46) fixée à un composant profilé (4) est prévue qui est configurée pouvant s'engrener dans un enroulement ou bord rabattu (54) de l'autre composant profilé (2).

8. Raccord détachable selon l'une des revendications précédentes, **caractérisé en ce qu'**au moins un composant profilé (2) présente au moins un collet de centrage (20) qui fait saillie au-dessus de l'un des composants profilés (2), recouvre l'autre composant profilé (4) en le chevauchant par le haut ou par le bas et est en contact linéaire avec celui-ci.

9. Raccord détachable selon la revendication 8, **caractérisé en ce que** le collet de centrage (20) est configuré en surface et est substantiellement parallèle à l'autre composant profilé (4).

10. Raccord détachable selon l'une des revendications précédentes, **caractérisé en ce qu'**il est prévu pour des coques de bâti (2, 4) de silencieux, de filtres à poussières, de catalyseurs et de réservoirs de carburant de véhicules, en particulier de véhicules utilitaires.
